# EUROPÄISCHE PATENTANMELDUNG

(11) **EP 0 865 946 A2**
(43) Veröffentlichungstag der Anmeldung: **23.09.1998**
(21) Anmeldenummer: 98103007.5
(22) Anmeldetag: 20.02.1998
(51) Int. Cl.: B60H 1/34, F24F 13/065

(54) **Luftausströmer**

(30) Priorität: 20.03.1997 DE 19711656
(71) Anmelder: Mannesmann VDO Aktiengesellschaft, 60388 Frankfurt/M. (DE)
(72) Erfinder: Görlach, Bettina, 61350 Bad Homburg (DE); Schäfer, Hans-Dieter, 61350 Bad Homburg (DE)
(74) Vertreter: Klein, Thomas, Dipl.-Ing.

(57) **Zusammenfassung**

Eine Blende (2) eines Luftausströmers ist um eine horizontale Lagerachse (4) schwenkbar auf einem Gelenkteil (6) gelagert. Das Gelenkteil (6) ist um eine vertikale Lagerachse (5) in einem Lüftungskanal (1) ebenfalls schwenkbar gelagert. Hierfür hat der Luftausströmer Lagerungen 7 - 9) mit Lagerschalen (12 - 14), die jeweils Lagerzapfen (10, 11, 15) um ungefähr 270° umgreifen. Hierdurch lassen sich die Blende (2), das Gelenkteil (6) und der Lüftungskanal (1) einfach zusammenstecken.

## Beschreibung

Die Erfindung betrifft einen Luftausströmer mit einer am Ende eines Lüftungskanals horizontal und vertikal schwenkbar gehaltenen, Luftauslässe aufweisenden Blende.

Solche Luftausströmer werden beispielsweise in heutigen Kraftfahrzeugen zur Zuführung von Frischluft in den Innenraum eingesetzt und sind aus der Praxis bekannt. Die Blende der Luftausströmer ist hierbei zur Einstellung einer vorgesehenen Einströmrichtung in den Innenraum von Hand in eine gewünschte Position verstellbar. Die Blende ist halbkugelförmig gestaltet und wird seitlich von dem Ende des Lüftungskanals umschlossen. Die Luftauslässe sind von einteilig mit der Blende gefertigten Lamellen begrenzt. Hierdurch besteht der Luftausströmer aus besonders wenigen, kostengünstig zu fertigenden und zu montierenden Bauteilen. Das Ende des Lüftungskanals besteht in der Regel aus zwei schalenförmigen Teilen, die bei der Montage des Luftausströmers miteinander verschraubt werden. Die einzelnen Bauteile des Luftausströmers werden in der Regel aus Kunststoff im Spritzgießverfahren gefertigt. Hierdurch hat der Luftausströmer ein besonders geringes Gewicht und ist kostengünstig zu fertigen.

Nachteilig bei den bekannten Luftausströmern ist, dass sie spritztechnisch schwierig zu fertigende Bauteile aufweisen. Beispielsweise ist bei der Fertigung die beiden schalenförmigen Teile des Lüftungskanals eine hohe Präzision erforderlich, damit die Blende nicht in einigen Positionen klemmt und sich in anderen Positionen von selbst verstellt. In der Praxis behilft man sich damit, dass man die Blende oder das Ende des Lüftungskanals mit einem Reibbelag versieht und die Vorspannung der beiden Teile des Lüftungskanals von Hand einstellt.

Der Erfindung liegt das Problem zugrunde, einen Luftausströmer der eingangs genannten Art so zu gestalten, dass er besonders wenige Bauteile aufweist und ein Klemmen der Blende in verschiedenen Positionen vermieden wird.

Dieses Problem wird erfindungsgemäß dadurch gelöst, dass die Blende auf einer Lagerachse an einem Gelenkteil und das Gelenkteil auf einer zu der Lagerachse der Blende um ungefähr 90° verdreht angeordneten Lagerachse in dem Lüftungskanal mittels Lagerungen schwenkbar befestigt sind.

Durch diese Gestaltung ist die Blende nach Art eines Kardangelenks an dem Lüftungskanal befestigt. Der erfindungsgemäße Luftausströmer weist spritztechnisch einfach und damit kostengünstig zu fertigende Lagerungen für die Lagerachsen auf. Da die Lagerungen besonders kleine Abmessungen aufweisen, führen Toleranzen oder Unebenheiten der Lagerungen nicht zu einem Klemmen der Blende in einzelnen Positionen. Die Blende kann beispielsweise halbkugelförmig oder walzenförmig gestaltet sein. Der erfindungsgemäße Luftausströmer besteht im einfachsten Fall nur aus drei einfach zu montierenden Bauteilen.

Die Montage des Luftausströmers gestaltet sich gemäß einer anderen vorteilhaften Weiterbildung der Erfindung besonders einfach, wenn die Lagerungen der Lagerachsen in Lagerschalen schwenkbare Lagerzapfen aufweisen und wenn die Lagerschalen die Lagerzapfen um ungefähr 270° umgreifen. Hierdurch lassen sich die einzelnen Bauteile des Luftausströmers einfach zusammenstecken.

Insbesondere bei in Kraftfahrzeugen eingesetzten Luftausströmern ist es wichtig, dass die Blende auch bei einer starken Luftströmung oder bei Schwingungen des Kraftfahrzeuges in ihrer eingestellten Position verharrt. Die hierzu bei den bekannten Luftausströmern vorgesehenen manuell einzustellenden Reibelemente lassen sich gemäß einer anderen vorteilhaften Weiterbildung der Erfindung vermeiden, wenn der Lüftungskanal, das Gelenkteil und die Blende im Bereich ihrer Lagerungen gegeneinander vorgespannt sind. Dies kann beispielsweise durch eine Vorspannung der Lagerschalen gegen die Lagerzapfen oder durch eine axiale Verspannung an den Lagerungen erreicht werden. Durch diese Gestaltung wird die vorgesehene Reibkraft bei der Fertigung der einzelnen Bauteile des Luftausströmers vorgesehen. Eine manuelle Einstellung ist daher nicht mehr erforderlich.

Zur Vermeidung des Entweichens von Luft zwischen dem Lüftungskanal und der Blende könnte man den Lüftungskanal mit der Blende mit einer Manschette abdichten. Eine solche Manschette ist jedoch aufwendig zu montieren und lässt sich gemäß einer anderen vorteilhaften Weiterbildung der Erfindung vermeiden, wenn die Blende das Gelenkteil und das Ende des Lüftungskanals übergreift. Hierbei könnte das Gelenkteil beispielsweise im Zentrum der Blende angeordnet sein.

Die Blende hat gemäß einer anderen vorteilhaften Weiterbildung der Erfindung besonders kleine Abmessungen, wenn der Lüftungskanal das Gelenkteil und das Gelenkteil die Blende übergreift. Das Gelenkteil dichtet hierbei die Blende gegen den Lüftungskanal ab. Hierdurch wird die Luftströmung durch das Gelenkteil geführt.

Die Montage des Luftausströmers gestaltet sich gemäß einer vorteilhaften Weiterbildung der Erfindung besonders einfach, wenn die Blende zwei radial nach außen abstehende Lagerzapfen und das Gelenkteil Lagerschalen für die Lagerzapfen der Blende aufweist. Hierdurch wird die Blende bei der Montage in das Gelenkteil hineingeschoben und dabei von dem Gelenkteil geführt. Da man hierbei die Lagerschale und die Lagerzapfen von außen sehen kann, lässt sich einfach überprüfen, ob die Lagerzapfen in den Lagerschalen einrasten. Weiterhin ist die Blende durch die nach außen hin abstehenden Lagerzapfen als spritztechnisch besonders einfaches Bauteil ausgebildet.

Zur weiteren Vereinfachung der Montage des erfindungsgemäßen Luftausströmers trägt es bei, wenn das Gelenkteil radial nach außen abstehende Lagerzapfen und der Lüftungskanal Bohrungen für die Lagerzapfen des Gelenkteils aufweist.

Eine Verletzungsgefahr an den Lagerzapfen lässt sich gemäß einer anderen vorteilhaften Weiterbildung der Erfindung einfach dadurch vermeiden, dass die Lagerzapfen an ihrem abstehenden Ende eine Wölbung aufweisen.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: eine perspektivische Darstellung eines erfindungsgemäßen Luftausströmers mit einer halbkugelförmigen Blende,
- Fig.2: einen Längsschnitt durch den Luftausströmer aus Fig.1,
- Fig.3: eine Ansicht von vorne auf einen Luftausströmer mit einer walzenförmigen Blende,
- Fig.4: eine vergrößerte Darstellung einer Lagerung.

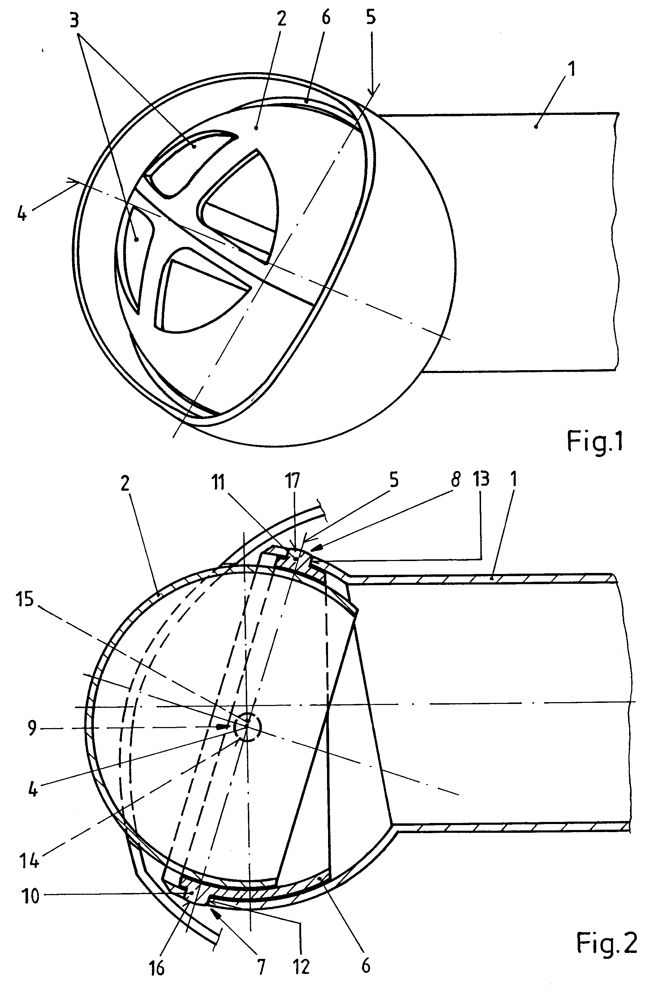

Die Figur 1 zeigt einen erfindungsgemäßen Luftausströmer mit einem Lüftungskanal 1 und einer Blende 2. Die Blende 2 weist eine Vielzahl von Luftauslässen 3 auf und lässt sich um eine horizontale Lagerachse 4 und um eine vertikale Lagerachse 5 verschwenken.

In Figur 2 ist in einem Längsschnitt durch den Luftausströmer aus Figur 1 zu erkennen, dass zwischen der Blende 2 und dem Lüftungskanal 1 ein Gelenkteil 6 angeordnet ist. Das Gelenkteil 6 ist mittels zweier einander gegenüberliegender Lagerungen 7, 8 um die vertikale Lagerachse 5 schwenkbar gehalten. Die Blende 2 ist mittels zweier, gegenüber den Lagerungen 7, 8 des Gelenkteils 6 in dem Lüftungskanal 1 um 90° verdreht angeordneter Lagerungen 9 schwenkbar gehalten. In dem dargestellten Längsschnitt ist nur eine der Lagerungen 9 der Blende 2 eingezeichnet.

Das Gelenkteil 6 hat zwei radial nach außen weisende Lagerzapfen 10, 11, die in Lagerschalen 12, 13 des Lüftungskanals 1 eingreifen. Für die Lagerung der Blende 2 weist das Gelenkteil 6 Lagerschalen 14 auf, in die radial nach außen abstehende Lagerzapfen 15 der Blende 2 eingreifen. Die Lagerzapfen 10, 11, 15 weisen an ihrem abstehenden Ende jeweils eine Wölbung 16, 17 auf.

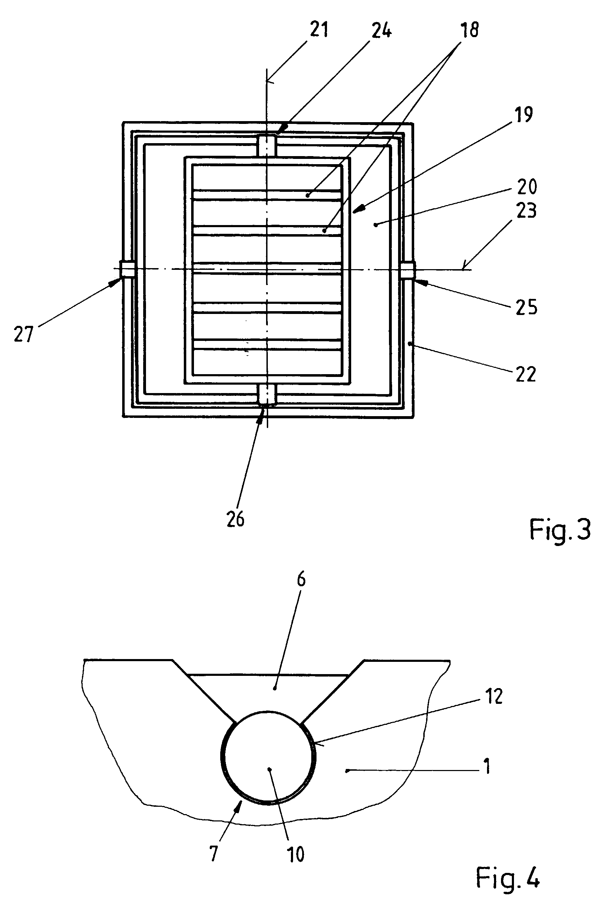

Die Figur 3 zeigt in einer Ansicht von vorne eine mehrere Lamellen 18 aufweisende Blende 19, die in einem Gelenkteil 20 um eine vertikale Lagerachse 21 schwenkbar gelagert ist. Das Gelenkteil 20 ist in einem Lüftungskanal 22 um eine horizontale Lagerachse 23 schwenkbar gelagert. Zur Abdichtung der Blende 19 gegenüber dem Gelenkteil 20 und des Gelenkteils 20 gegenüber dem Lüftungskanal 22 sind das Gelenkteil 20 und die Blende 19 jeweils walzenförmig gestaltet. Die Lagerachsen 21, 23 weisen jeweils zwei Lagerungen 24 - 27 auf.

In Figur 4 ist stellvertretend für die Lagerungen 7 - 9 der Lagerachsen 4, 5, 21, 23 eine der Lagerungen 7 stark vergrößert dargestellt. Die Lagerschale 12 umschließt den Lagerzapfen 10 um ungefähr 270°. Hierdurch lässt sich der Lagerzapfen 10 einfach durch den offenen Bereich in die Lagerschale 12 eindrücken. Die Lagerschale 12 hat einen geringfügig kleineren Durchmesser als der Lagerzapfen 10. Die Lagerschale 12 ist hierdurch gegen den Lagerzapfen 10 vorgespannt, so dass bei einem Verdrehen des Lagerzapfens 10 in der Lagerschale 12 ein der Drehbewegung entgegengesetztes Reibmoment wirkt.

## Patentansprüche

1. Luftausströmer mit einer am Ende eines Lüftungskanals horizontal und vertikal schwenkbar gehaltenen, Luftauslässe aufweisenden Blende, **dadurch gekennzeichnet,** dass die Blende (2, 19) auf einer Lagerachse (4, 21) an einem Gelenkteil (6, 20) und das Gelenkteil (6, 20) auf einer zu der Lagerachse (4, 21) der Blende (2, 19) um ungefähr 90° verdreht angeordneten Lagerachse (5, 23) in dem Lüftungskanal (1, 22) mittels Lagerungen (7 - 9, 24 - 27) schwenkbar befestigt sind.

2. Luftausströmer nach Anspruch 1, **dadurch gekennzeichnet**, dass die Lagerungen (7 - 9, 24 - 27) der Lagerachsen (4, 5, 21, 23) in Lagerschalen (12 - 14) schwenkbare Lagerzapfen (10, 11, 15) aufweisen und dass die Lagerschalen (12 - 14) die Lagerzapfen (10, 11, 15) um ungefähr 270° umgreifen.

3. Luftausströmer nach Anspruch 1 oder 2, **dadurch gekennzeichnet**, dass der Lüftungskanal (1, 22), das Gelenkteil (6, 20) und die Blende (2, 19) im Bereich ihrer Lagerungen (7 - 9, 24 - 27) gegeneinander vorgespannt sind.

4. Luftausströmer nach zumindest einem der vorhergehenden Ansprüche, **dadurch gekennzeichnet**, dass die Blende (2, 19) das Gelenkteil (6, 20) und das Ende des Lüftungskanals (1, 22) übergreift.

5. Luftausströmer nach zumindest einem der vorhergehenden Ansprüche, **dadurch gekennzeichnet**, dass der Lüftungskanal (1, 22) das Gelenkteil (6, 20) und das Gelenkteil (6, 20) die Blende (2, 19) übergreift.

6. Luftausströmer nach zumindest einem der vorhergehenden Ansprüche, **dadurch gekennzeichnet**, dass die Blende (2, 19) zwei radial nach außen abstehende Lagerzapfen (15) und das Gelenkteil (6, 20) Lagerschalen (14) für die Lagerzapfen (15) der Blende (2, 19) aufweist.

7. Luftausströmer nach zumindest einem der vorhergehenden Ansprüche, **dadurch gekennzeichnet**, dass das Gelenkteil (6, 20) radial nach außen abstehende Lagerzapfen (10, 11) und der Lüftungskanal (1, 22) Lagerschalen (12, 13) für die Lagerzapfen (10, 11) des Gelenkteils (6, 20) aufweist.

8. Luftausströmer nach zumindest einem der vorhergehenden Ansprüche, **dadurch gekennzeichnet**, dass die Lagerzapfen (10, 11, 15) an ihrem abstehenden Ende eine Wölbung (16, 17) aufweisen.
